# EUROPEAN PATENT APPLICATION

(11) **EP 2 439 925 A1**
(43) Date of publication of application: **11.04.2012**
(21) Application number: 09845438.2
(22) Date of filing: 26.11.2009
(51) Int. Cl.: H04N 5/00, H04N 5/45, H04N 7/173

(54) **METHOD, SYSTEM AND SET-TOP BOX FOR REALIZING PICTURE-IN-PICTURE IN INTERNET PROTOCOL TV**

(30) Priority: 01.06.2009 CN 200910142163
(71) Applicant: ZTE Corporation, Shenzhen, Guangdong 518057 (CN)
(72) Inventor: HUANG, Zhihua, Shenzhen Guangdong 518057 (CN)
(74) Representative: Mertens, Hans Victor
(86) International application number: PCT/CN2009/075151
(87) International publication number: WO 2010/139158

(57) **Abstract**

The present invention discloses a method for realizing picture-in-picture (PIP) in an internet protocol TV (IPTV), comprising: when a common channel of the IPTV is being played, a set-top box (STB) opens a PIP window after receiving a command of playing a PIP channel; the STB obtains the playing address of the PIP channel from an electronic program guide (EPG) server, and obtains a media stream of the PIP channel from a media server according to the playing address of the PIP channel; the STB plays, in the PIP window, the media stream of the PIP channel obtained from the media server. The invention enables the users of an IPTV to switch freely to preview other video programs without exiting the video program currently watched by realizing PIP function in the IPTV, and thus provides whole new experience for a user.

## Description

### Technical field of the invention

The invention relates to the technical field of internet protocol TV (IPTV), and in particular to a method, a system and a set-top box (STB) for realizing picture-in-picture (PIP) in an IPTV.

### Background of the invention

IPTV is a video media service. With the continuous maturation of technology and the deep development of service of IPTV, the user number of IPTV is increasing. IPTV not only can provide rich and varied electronic program navigating pages, but also can provide services such as video on-demand, television review, personal recording, information browse, games and so on, in addition, IPTV has various interactive functions.

At present, in the technical field of IPTV, the study on one-channel video stream playing technology has made a great breakthrough. However, the playing mode of one-channel video stream has the following defect that: when watching a video, the user must shut down the current video firstly to perform a program switch if the user wants to preview other video programs. This mode influences the user experience to some extent.

PIP is a specific application for simultaneously playing a multi-channel video stream. When watching a common channel, a user can call out a PIP window through a remote controller to play a PIP channel in the PIP window and can perform a channel plus/minus switch in the PIP window to preview programs.

To sum up, the capability of realizing PIP in an IPTV will certainly bring whole new experience to a user.

### Summary of the invention

The technical problem to be solved in the invention is to provide a method, a system and a STB for realizing PIP in an IPTV, so as to solve the problem that the currently played video program must be shut down when other video programs are to be previewed in the present IPTV.

To solve the technical problem above, the invention provides a method for realizing PIP in an IPTV, comprising:
opening a PIP window by a STB after receiving a command of playing a PIP channel when a common channel of the IPTV is being played,;
obtaining a playing address of the PIP channel from an electronic program guide (EPG) server by the STB, and obtaining a media stream of the PIP channel from a media server according to the playing address of the PIP channel;
playing, in the PIP window by the STB, the media stream of the PIP channel obtained from the media server.

The PIP channel is a PIP channel to which the common channel being played corresponds; after opening the PIP window, the STB calculates the channel number of the corresponding PIP channel according to the channel number of the common channel being played and obtains the playing address of the PIP channel from the EPG server according to the channel number of the PIP channel.

When a user selects a channel for the PIP window, the STB inquires, according to received key information, the common channel to which the key information corresponds from a channel list and calculates the channel number of the corresponding PIP channel according to the channel number of the common channel, and obtains the playing address of the PIP channel from the EPG server according to the channel number of the PIP channel.

When a user performs channel plus or minus for the PIP window, the STB obtains a playing address from the EPG server according to the channel number of the previous or next PIP channel of PIP channel currently played.

After receiving a command of displaying the PIP channel in a full screen, the STB erases the PIP window, calculates the channel number of the common channel to which the PIP channel being played corresponds, obtains the playing address from the EPG server according to the channel number of the corresponding common channel, and obtains a media stream of the common channel from the media server according to the playing address of the corresponding common channel and plays it.

The channel number of the common channel and the channel number of the PIP channel are different by a weight.

A system for realizing PIP in an IPTV, comprising: a STB, an EPG server and a media server, wherein:
the EPG server is configured to save configured playing addresses of a PIP channel;
the media server is configured to save media streams of the PIP channel;
the STB is configured to open a PIP window after receiving a command of playing a PIP channel when a common channel of the IPTV is being played, obtain the playing address of the PIP channel from the EPG server, obtain a media stream of the PIP channel from the media server according to the playing address of the PIP channel, and play, in the PIP window, the media stream of the PIP channel obtained from the media server.

The PIP channel is a PIP channel to which the common channel being played corresponds; after opening the PIP window, the STB is further configured to calculate the channel number of the corresponding PIP channel according to the channel number of the common channel being played and obtain the playing address of the PIP channel from the EPG server according to the channel number of the PIP channel.

A STB for realizing PIP in an IPTV, comprising: a browser processing module (BW) module, a javascript (JS) module, a video on-demand (vod) module, wherein:
the BW module is configured to receive a command of playing a PIP channel and send the command to the JS module, and is further configured to call the vod module to realize a media play control after receiving a notification from the JS module;
the JS module is configured to controll the opening of a PIP window after receiving the command of playing a PIP channel, and is further configured to obtain the playing address of the PIP channel, realize a media stream transmission to the vod module according to the playing address, and notify the BW module to call the vod module to realize the media play control;
the vod module is configured to realize the media play control for the received media stream of the PIP channel.

The media stream transmission to the vod module is realized via an underlying playing interface; the underlying playing interface is configured to obtain a media stream according to the playing address and send the obtained media stream to the vod module.

The PIP channel is a PIP channel to which the common channel being played corresponds; the JS module is further configured to calculate the channel number of the corresponding PIP channel according to the channel number of the common channel being played and obtain the playing address of the PIP channel according to the channel number of the PIP channel.

The STB further comprises a media decoding and displaying device, which is configured to decode and play the received media stream of the PIP channel;
the vod module is further configured to send the received media stream of the PIP channel to the media decoding and displaying device in a playing state.

The STB further comprises a key receiving module, which is configured to receive a command selected by a user for playing a PIP channel and send the received command of playing a PIP channel to the BW module.

To sum up, the method, the system and the STB in the invention all enable a user of IPTV to switch freely to preview other video programs without exiting the currently watched video program by realizing PIP function in the IPTV, and thus provide whole new experience for a user.

### Brief description of the drawings

Fig. 1 shows a flowchart of a method for realizing PIP in an IPTV according to the invention;
Fig. 2 shows a structural diagram of a system for realizing PIP in an IPTV according to the invention;
Fig. 3 shows a structural diagram of a STB according to the invention.

### Detailed description of the invention

The specific implementation of the invention is illustrated below in conjunction with accompanying drawings.

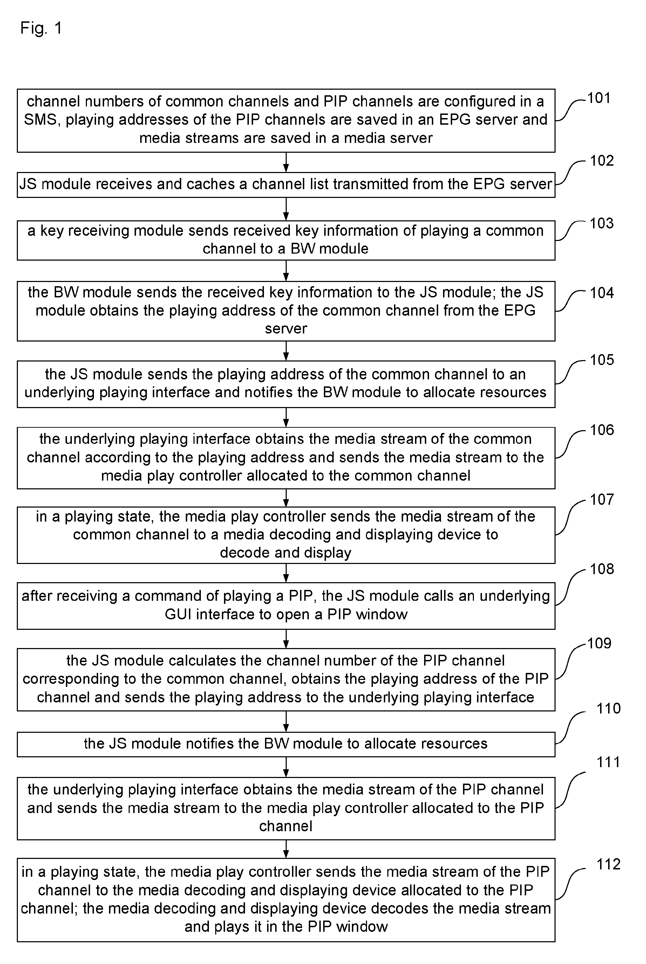

Fig. 1 shows a method for realizing PIP in an IPTV according to the invention, comprises:
101: channel numbers of common channels and PIP channels are configured in a SMS (channel processing module), media streams of the PIP channels and the common channels are saved in a media server, and playing addresses of the PIP channels and the common channels are configured in an EPG server.

For an IPTV channel, a PIP channel number may be obtained by adding a weight to the common channel number of the IPTV channel. For example, the common channel number of IPTV channel CCTV1 is 1, the PIP channel number thereof may be configured as 1 + 1000 = 1001.

Since a PIP channel is displayed in a small window, therefore a compression manner different from that of the common source file of the IPTV channel can be applied and the audio part also can be removed.
102: a JS module of a STB receives and caches a channel list transmitted from the EPG server.
103: a user selects a command of playing a common channel, a key receiving module of the STB sends received key information, that the user selecting for playing a common channel, to a BW module of the STB.
104: the BW module transmits the received key information to the JS module which then inquires the corresponding common channel in the channel list according to the received key information and obtains the playing address of the common channel from the EPG server according to the channel number of the common channel.
105: the JS module calls an underlying playing interface, sends the playing address of the common channel to the underlying playing interface, and notifies the BW module to allocate resources; the BW module calls a video on-demand (vod) module and a media decoding and displaying (Dec) module to allocate a media play controller and a media decoding and displaying device for the media stream of the common channel.
   For example, the video on-demand module allocates a media play controller Vid0 for the media stream of the common channel; the media decoding and displaying module allocates a media decoding and displaying device Did0 for the media stream of the common channel.
106: the underlying playing interface obtains media stream from the media server according to the playing address of the common channel and sends the media stream transmitted from the media server to the media play controller allocated to the common channel; then the media play controller realizes the playing, the shutdown, the pausing and other controls for the media stream.
107: in a playing state, the media play controller sends media stream to the media decoding and displaying device allocated to the common channel; then the media decoding and displaying device decodes the media stream and plays it in a main picture.
108: the BW module forwards a command received by the key receiving module for playing a PIP channel to the JS module, the JS module then calls an underlying graphic user interface (GUI) to open a PIP window.

The under layer on the display screen is a full-screen video play main picture; the underlying GUI interface superposes a GUI layer on the main picture and opens a small video play window (that is, the PIP window) at the GUI layer for playing the PIP channel. The playing information and function prompt of the PIP window, such as the the channel being played by the PIP window, key "OK" which means displaying the PIP window in a full screen, key "PIP" which means closing the PIP window, may be displayed at the GUI layer.

At this moment, all the key operations are defaulted as that for the PIP window.
109: the JS module calculates the channel number of the PIP channel to which the common channel corresponds according to the channel number of the common channel being played in the main picture, obtains the playing address of the PIP channel from the EPG server according to the channel number of the PIP channel, if a corresponding PIP channel exists, then calls the underlying playing interface and sends the playing address of the PIP channel to the underlying playing interface.
110: the JS module notifies the BW module to allocate resources; the BW module calls the vod module and the Dec module to allocate a media play controller and a media decoding and displaying device for the media stream of the PIP channel.

For example, the video on-demand module allocates a media play controller Vid1 for the media stream of the PIP channel; the media decoding and displaying module allocates a media decoding and displaying device Did1 for the media stream of the PIP channel.
111: the underlying playing interface obtains the media stream of the PIP channel from the media server according to the playing address of the PIP channel, sends the media stream transmitted from the media server to the media play controller; the media play controller realizes the playing, the shutdown, the pausing and other controls for the media stream.
112: in a playing state, the media play controller sends the media stream of the PIP channel to the media decoding and displaying device; then the media decoding and displaying device decodes the media stream and plays it in the PIP window.

When the user selects a channel for the PIP window, the JS module inquires, according to the received key information, the common channel corresponding to the key information in the channel list and calculates the channel number of the corresponding PIP channel according to the channel number of the common channel, and obtains the playing address of the PIP channel from the EPG server according to the channel number of the PIP channel so as to realize play.

After receiving a command of performing channel plus/minus with respect to the PIP window, the JS module notifies the underlying playing interface to stop obtaining the media stream of the current PIP channel from the media server and notifies the BW module to close the media play controller and the media decoding and displaying device allocated to the current PIP channel; the JS module, according to the channel number of the previous or next PIP channel of the current PIP channel, obtains a playing address from the EPG server and obtains a media stream from the media server, notifies the BW module to recall the player vid1 and decoder Did1 to display the PIP channel.

After receiving a command of displaying the PIP channel in a full screen, the JS module notifies the underlying GUI interface to erase the PIP window, calculates the channel number of the common channel to which the PIP channel being played corresponds and obtains the playing address of the corresponding common channel, notifies the underlying playing interface to stop obtaining the media stream of the PIP channel from the media server and notifies the BW module to close the media play controller and the media decoding and displaying device allocated to the PIP channel; the BW closes the media play controller Vid0 and the media decoding and displaying device Did0 of the common channel being played currently, interrupts the media service of the common channel being played currently, obtains the media stream according to the playing address of the common channel to which the PIP channel corresponds and reallocates resources to play.

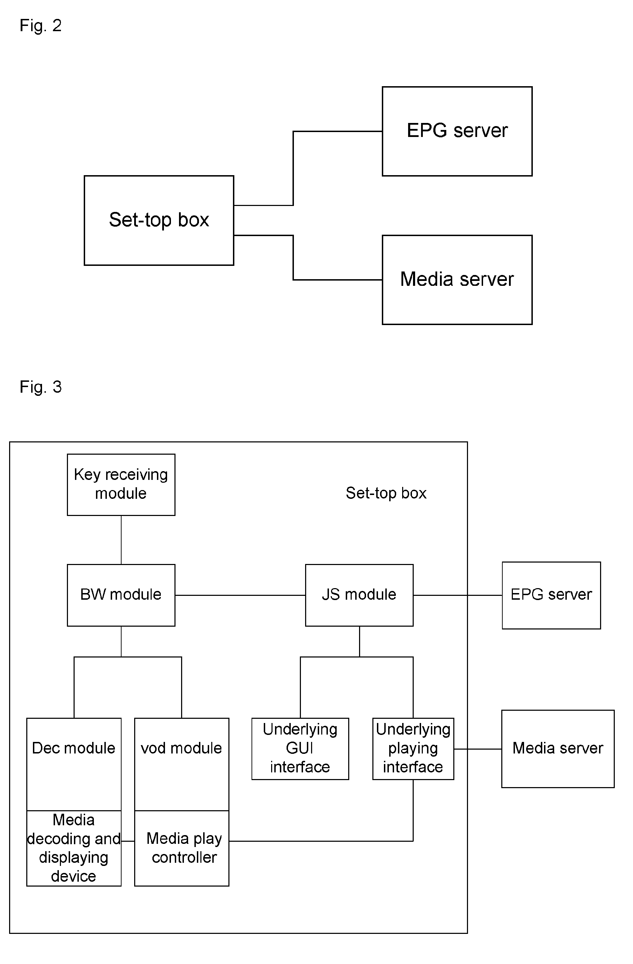

Fig. 2 shows a system for realizing PIP in an IPTV according to the invention, wherein the system comprises: a STB, an EPG server, a media server and a channel processing module. Referring to Fig. 3, the STB comprises: a key receiving module, a BW module, a JS module, a vod module and a Dec module.

The channel processing module is configured to save configured channel numbers of common channels and PIP channels.

The EPG server is configured to save configured playing addresses of the PIP channels and the common channels.

The media server is configured to save media streams of the PIP channels and the common channels.

The key receiving module is configured to receive a command selected by a user for playing a PIP channel, a command for the user to select a channel for a PIP window, a command for the user to perform channel plus/minus for the PIP window and a command for the user to display a PIP channel in a full screen, and configured to send the received command to the BW module.

The BW module is configured to transparently transmit the command received from the key receiving module to the JS module, and is configured to call the vod module and the Dec module to allocate a media play controller and a media decoding and displaying device for the media stream of a PIP channel and a common channel after receiving a resource allocation notification from the JS module, and close the media play controller and the media decoding and displaying device of the common channel or the PIP channel being played currently after receiving a stop notification from the JS module.

The JS module is configured to call a underlying GUI interface to open a PIP window after receiving the command of playing a PIP channel, and calculate the channel number of the PIP channel to which the common channel corresponds according to the channel number of the common channel being played in the main picture, obtain the playing address of the PIP channel from the EPG server according to the channel number of the PIP channel and send the obtained playing address of the PIP channel to a underlying playing interface; the JS module is further configured to send a resource allocation notification to the BW module to notify the BW module to allocate resources, and to inquire, according to received key information, the common channel to which the key information corresponds from a channel list and calculate the channel number of the corresponding PIP channel according to the channel number of the common channel, obtain the playing address of the PIP channel from the EPG server according to the channel number of the PIP channel; and after receiving the command of performing channel plus/minus for the PIP window, the JS module notifies the underlying playing interface to stop obtaining the media stream of the current PIP channel from the media server, and sends a stop notification to the BW module to notify the BW module to close the media play controller and the media decoding and displaying device allocated to the current PIP channel, and obtains a playing address from the EPG server and obtains a media stream from the media server according to the channel number of the previous or next PIP channel of the current PIP channel, notifies the BW module to recall the player vid1 and decoder Did1 to display the PIP channel; after receiving the command of displaying the PIP channel in a full screen, the JS module sends an erasure notification to the underlying GUI interface to notify the underlying GUI interface to erase the PIP window, and calculates the channel number of the common channel to which the PIP channel being played corresponds and obtains the playing address of the corresponding common channel, notifies the underlying playing interface to stop obtaining the media stream of the PIP channel from the media server and sends a stop notification to the BW module to notify the BW module to close the media play controller and the media decoding and displaying device allocated to the PIP channel.

The underlying playing interface is configured to obtain the media stream of the PIP channel from the media server according to a received playing address of the PIP channel, send the obtained media stream to the media play controller allocated to the PIP channel, further obtain the media stream of a common channel from the media server according to a received playing address of the common channel and send the obtained media stream to the media play controller allocated to the common channel.

The media play controller is configured to realize the playing, the shutdown, the pausing and other controls for the received media stream of a PIP channel and a common channel, and in a playing state, send the received media stream of the PIP channel and the common channel to the media decoding and displaying device allocated to the PIP channel or the common channel.

The media decoding and displaying device is configured to decode the received media stream of a PIP channel and play the decoded media stream in the PIP window, and to decode and play the received media stream of a common channel.

The devices above all can be implemented by function modules.

To sum up, the method, the system and the STB in the invention all can enable the user of an IPTV to switch freely to preview other video programs without exiting the video program currently watched by realizing PIP function in the IPTV, and thus provide whole new experience for a user.

The above is only the preferred embodiment of the invention and not intended to limit the present invention. For those skilled in the art, various modifications and changes can be made to the present invention. Any modification, equivalent substitute and improvement within the spirit and principle of the present invention are deemed to be included within the scope of the present invention.

## Claims

1. A method for realizing picture-in-picture (PIP) in an internet protocol TV (IPTV), comprising:
opening a PIP window by a set-top box (STB) after receiving a command of playing a PIP channel when a common channel of the IPTV is being played;
obtaining a playing address of the PIP channel from an electronic program guide (EPG) server by the STB, and obtaining a media stream of the PIP channel from a media server according to the playing address of the PIP channel;
playing, in the PIP window by the STB, the media stream of the PIP channel obtained from the media server.

2. The method according to claim 1, wherein the PIP channel is a PIP channel to which the common channel being played corresponds; after opening the PIP window, the STB calculates the channel number of the corresponding PIP channel according to the channel number of the common channel being played and obtains the playing address of the PIP channel from the EPG server according to the channel number of the PIP channel.

3. The method according to claim 2, wherein when a user selects a channel for the PIP window, the STB inquires, according to received key information, the common channel to which the key information corresponds from a channel list and calculates the channel number of the corresponding PIP channel according to the channel number of the common channel, and obtains the playing address of the PIP channel from the EPG server according to the channel number of the PIP channel.

4. The method according to claim 2, when a user performs channel plus or minus for the PIP window, the STB obtains a playing address from the EPG server according to the channel number of the previous or next PIP channel of PIP channel currently played.

5. The method according to claim 2, wherein after receiving a command of displaying the PIP channel in a full screen, the STB erases the PIP window, calculates the channel number of the common channel to which the PIP channel being played corresponds, obtains the playing address from the EPG server according to the channel number of the corresponding common channel, and obtains a media stream of the common channel from the media server according to the playing address of the corresponding common channel and plays it.

6. The method according to any one of claims 2 to 5, wherein the channel number of the common channel and the channel number of the PIP channel are different by a weight.

7. A system for realizing PIP in an IPTV, comprising: a STB, an EPG server and a media server, wherein:
the EPG server is configured to save configured playing addresses of a PIP channel;
the media server is configured to save media streams of the PIP channel;
the STB is configured to open a PIP window after receiving a command of playing a PIP channel when a common channel of the IPTV is being played, obtain the playing address of the PIP channel from the EPG server, obtain a media stream of the PIP channel from the media server according to the playing address of the PIP channel, and play, in the PIP window, the media stream of the PIP channel obtained from the media server.

8. The system according to claim 7, wherein the PIP channel is a PIP channel to which the common channel being played corresponds; after opening the PIP window, the STB is further configured to calculate the channel number of the corresponding PIP channel according to the channel number of the common channel being played and obtain the playing address of the PIP channel from the EPG server according to the channel number of the PIP channel.

9. A STB for realizing PIP in an IPTV, comprising: a browser processing module (BW) module, a javascript (JS) module, a video on-demand (vod) module, wherein:
the BW module is configured to receive a command of playing a PIP channel and send the command to the JS module, and is further configured to call the vod module to realize a media play control after receiving a notification from the JS module;
the JS module is configured to controll the opening of a PIP window after receiving the command of playing a PIP channel, and is further configured to obtain the playing address of the PIP channel, realize a media stream transmission to the vod module according to the playing address, and notify the BW module to call the vod module to realize the media play control;
the vod module is configured to realize the media play control for the received media stream of the PIP channel.

10. The STB according to claim 9, wherein the media stream transmission to the vod module is realized via an underlying playing interface; the underlying playing interface is configured to obtain a media stream according to the playing address and send the obtained media stream to the vod module.

11. The STB according to claim 9, wherein the PIP channel is a PIP channel to which the common channel being played corresponds; the JS module is further configured to calculate the channel number of the corresponding PIP channel according to the channel number of the common channel being played and obtain the playing address of the PIP channel according to the channel number of the PIP channel.

12. The STB according to any one of claims 9 to 11, further comprising a media decoding and displaying device, which is configured to decode and play the received media stream of the PIP channel;
the vod module is further configured to send the received media stream of the PIP channel to the media decoding and displaying device in a playing state.

13. The STB according to claim 9, further comprising a key receiving module, which is configured to receive a command selected by a user for playing a PIP channel and send the received command of playing a PIP channel to the BW module.
